(19) Europäisches Patentamt
European Patent Office
Office européen des brevets

(11) Publication number: **0 014 851**
**A1**

(12) **EUROPEAN PATENT APPLICATION**

(21) Application number: 80100341.9

(22) Date of filing: 23.01.80

(51) Int. Cl.³: C 08 G 59/14
C 25 D 13/06

(30) Priority: 25.01.79 US 6936

(43) Date of publication of application: 03.09.80 Bulletin 80/18

(84) Designated Contracting States: AT BE CH DE FR GB IT NL SE

(71) Applicant: THE DOW CHEMICAL COMPANY
2030 Abbott Road Post Office Box 1967
Midland, Michigan 48640(US)

(72) Inventor: Wessling, Ritchie Anton
5007 Nurmi
Midland Midland, Michigan(US)

(72) Inventor: Yats, Larry Deane
2840 Franklin
Clare Clare, Michigan(US)

(72) Inventor: Perry, William Overton
323 Live Oak
Lake Jackson Brazoria, Texas(US)

(72) Inventor: Elms, William Jay
326 Petunia
Lake Jackson Brazoria, Texas(US)

(74) Representative: Hann, Michael, Dr.
Ludwigstrasse 67
D-6300 Giessen(DE)

(54) **A water-compatible composition based on an epoxide resin modified by a pyridinium compound, and a method of preparing it.**

(57) Water-compatible compositions are described comprising at least one resinous compound whose backbone is linear and contains at least one oxyaryleneoxyalkylene or oxyaryleneoxy(1,3-(2-hydroxy)alkylene) unit and which bears at least two functional organic moieties through which cross-linking can occur (preferably groups having active hydrogen and/or blocked isocyanato groups, more preferably aliphatic hydroxyl groups) and at least one terminal pyridinium group covalently bonded through the pyridinium nitrogen atom. These compositions when mixed with water have a pH below 10. These compositions are useful coating compositions which find particular utility in cathodic electrodeposition. The compositions are prepared, for example, by reacting a linear epoxy resin with a pyridine in the presence of sufficient amount of a Bronsted acid and water to stabilize the pyridinium salt thus formed. Blocked isocyanates are compatible cross-linkers with the new resinous compositions.

EP 0 014 851 A1

Croydon Printing Company Ltd.

TITLE MODIFIED
see front page

NOVEL PYRIDINIUM-MODIFIED EPOXY RESINS SUITABLE FOR USE IN CATHODIC ELECTRODEPOSITION

This invention is directed to a water--compatible composition comprising at least one resinous compound whose backbone is linear and contains at least one oxyaryleneoxyalkylene or oxyaryleneoxy(1,3-(2--hydroxy)alkylene) unit and which bears at least two functional cross-linking organic moieties through which cross-linking can occur characterized in that the resinous compound contains at least one terminal pyridinium group covalently bonded through the pyridinium nitrogen atom, the composition having a pH of less than 10. Preferably the functional organic moieties through which cross-linking can occur are active hydrogen and/or blocked isocyanate groups, more preferably aliphatic hydroxyl groups. By "active hydrogen" is meant active in the Zerewitinoff reaction. Depending upon the molecular weight of the resinous compounds and the number of pyridinium groups, the compositions of this invention range from water-soluble compositions having superb surfactant properties to water-dispersible film-forming compositions which are readily combined with water to form artificial latexes. The average molecular weight of these compounds ranges from 400 to 7000, preferably from 900 to 4000. Aqueous



BAD ORIGINAL

dispersions comprising the pyridinium compositions of this invention are excellent coating compositions which find particular applicability in cathodic electrodeposition, for example, the pigmented latexes containing a suitable water-insoluble cross-linker and preferably having a small particle size less than 1500 Angstroms are excellent in this regard. The pyridinium compositions are also particularly useful for imparting corrosion resistance to coatings on steel.

The pyridiniums here described represent a unique class of pH independent compounds which differ greatly from the conventional tertiary amine resin systems which are dispersed in water with acids and which differ sharply from conventional quaternary ammonium systems known in the art. Protonated amine dispersed systems are highly pH sensitive and the charge density varies directly with the number of amine nitrogen atoms which are protonated or deprotonated. Quaternary ammonium systems are pH independent, that is, unaffected by protonation or deprotonation of the hetero atom, over substantially the entire pH range. The quaternary ammonium systems, for example, are stable for extended periods of time at pH of 12 or 13, which is the pH at or near the cathode surface having electrodeposition. The pyridinium resins, on the other hand, are pH independent over the useful pH range of from 3 to 10 but at a pH of greater than about 10, the pyridinium ring decomposes into various nonionic products. This instability at a pH of greater than about 10 leads to charge destruction at the cathode surface, with the simultaneous loss of colloidal stability which assists in the rapid deposition of a less conductive coating of resin particles on the cathode

surface. This gives the pyridinium resin systems, therefore, the advantages both of the quaternary ammonium in terms of pH independence and the advantage of the tertiary amine type electrodeposition systems of charge destruction and instability at elevated pH. Thus, more rapid current cut off and greater throwing power are provided. The water-compatible compositions here described represent, therefore, a substantial advance in the state of the art.

By "water-soluble" is meant a resinous compound which forms a thermodynamically stable mixture with water. The mixtures form spontaneously and have been referred to in the prior art as true solutions if the individual molecules are dispersed, and as micellar or colloidal solutions if the molecules exist in an aggregated state.

In contrast, by "water-dispersible" is meant a resinous compound which can be dispersed in water without the use of surfactants to form an artificial latex which is meta-stable in the thermodynamic sense. The resin does not, however, spontaneously form a colloidal solution.

Those skilled in the art recognize that the boundary between water-soluble and water-dispersible is not sharp. The transition from one class to the other depends on resin polarity, molecular weight, charge density, type of counter ion and the level of coupling solvents. In many cases, the resin comprises a mixture of water-soluble and water-dispersible species. By the term "water-compatible" as applied to the resinous

BAD ORIGINAL

compounds is meant water-dispersible materials, water-soluble materials or mixtures thereof according to the foregoing description.

In this specification, aqueous dispersions comprised of water-insoluble pre-formed polymers are termed artificial latexes as contrasted with synthetic latexes formed directly by emulsion polymerization. According to some conventions, the nonfilm-forming artificial latexes are categorized as aqueous dispersions, that is, solid particles dispersed in liquid. Film-forming latexes, by analogy, are categorized as emulsions, that is, liquid dispersed in liquid. The term "artificial latex", therefore, includes both types as well as mixtures also containing water-soluble polymers.

"Artificial latexes" are latexes produced by the dispersion or redispersion of preformed water-insoluble polymers or solutions thereof. Artificial latexes are produced by known emulsification processes, for example, by addition of water with stirring until phase inversion occurs, by high shear mixing with water at elevated temperatures or by dilution of a mixture of water and a water-miscible solvent followed by stripping to remove the solvent. A surfactant is required in the emulsification process unless hydrophilic groups are attached to the polymer in amounts sufficient to assist dispersion but insufficient to produce water solubility. Such artificial latexes are produced from polymers which are not prepared readily from monomers by emulsion polymerization.

The water-compatible compositions of this invention are conveniently prepared by reacting a resinous organic compound having at least one terminal 1,2-epoxy group with a pyridine in the presence of sufficient amounts of a Brönsted acid and water to stabilize the pyridinium salt thus formed.

Another method is to react the resinous epoxide with a hydrohalic acid such as, for example, hydrochloric acid, hydrobomic acid or hydroiodic acid, to first form the corresponding resinous halohydrin which is then reacted with the pyridine reactant in the presence of sufficient water to stabilize the resinous pyridinium halide thus formed.

In yet another process, the resinous organic compound terminated with a phenolic hydroxyl group is reacted with a dihalo compound such as a dichloro or dibromo alkane having at least two carbon atoms with the halo substituents located on different carbon atoms in the molecule. This step of the reaction is conducted in the presence of a hydrohalide acceptor. The reaction product bears a terminal chloro or bromo group and reacts with a pyridine in the presence of a protic solvent such as water or a lower alkanol to give the desired pyridinium compound.

Other processes for making the desired compounds will be apparent to those skilled in the art. The presently preferred process for making the novel compositions is represented by the first process in which a resinous epoxide is reacted with a pyridine in the presence of acid and water. All subsequent remarks directed to reactants, process conditions, etc., will be directed to this process.



BAD ORIGINAL

The resinous epoxy-containing reactant has a linear backbone which contains at least one oxyaryleneoxyalkylene or oxyaryleneoxy(1,3-(2-hydroxy)alkylene) unit and which bears at least one group having an active hydrogen, such as an aliphatic hydroxyl group, and at least one terminal 1,2-epoxy group. An "aliphatic hydroxyl group" is an organic group having a hydroxyl moiety (-OH) attached to an aliphatic carbon atom; e.g.,

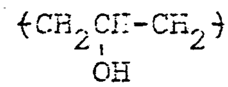 .

An "arylene" group is, of course, a divalent aromatic mono- or polynuclear hydrocarbon or a polynuclear hydrocarbon whose chain length is interrupted by a divalent connecting group(s) between aromatic rings. Examples of "arylene" groups include the following:

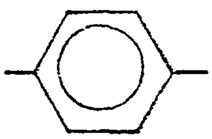 , 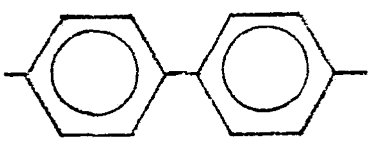 , 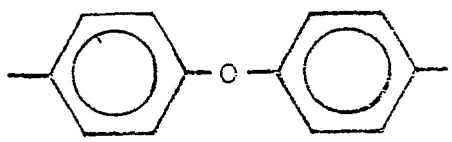

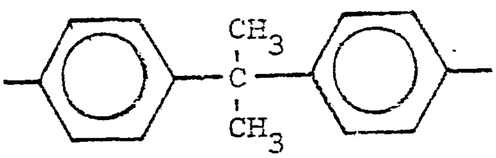 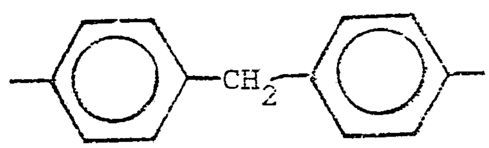 .

Likewise, an "alkylene" group is a divalent alkane group. Many of these resinous materials have been prepared by the condensation of an epihalohydrin such as epichlorohydrin with a dihydric mono- or polynuclear phenol such as bisphenol A. The ratio of reactants in the reaction of epihalohydrin with the dihydric phenol determines whether the end product

BAD ORIGINAL

has terminal phenolic hydroxyl groups, terminal glycidyl ether groups, or one terminal glycidyl ether group and one terminal phenolic hydroxyl group. Most commercially available epoxy resins of this type have an average of two terminal glycidyl ether groups. A wide variety of these epoxy resins are described, for example, in the classical text, "Handbook of Epoxy Resins" by Lee and Neville, McGraw-Hill Publishing Company, New York (1967) and in "Epoxy Resins, Chemistry and Technology", by May and Tanaka, Marcel Dekker, Inc. (1973). Polymers of the reaction of an epihalohydrin with a dihydric phenol consist of oxy-aryleneoxy(1,3-(2-hydroxy)propylene) units. The preferred resinous materials have backbones which consist essentially of repeating units of the formula:

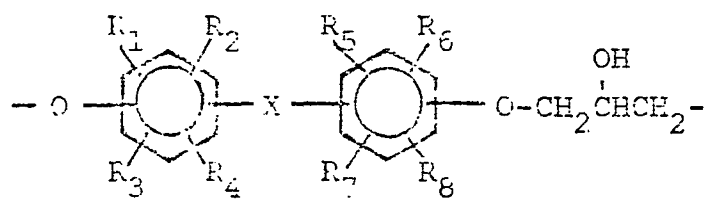

wherein: X is a single covalent chemical bond or a divalent alkali-stable connecting group. X is preferably a single covalent bond; -O-; -S-;

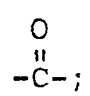 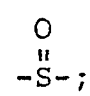 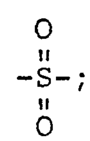

or lower alkylene or lower alkylidene of from 1 to 6 carbon atoms, inclusive. X is more preferably methylene or isopropylidene, and is most preferably

BAD ORIGINAL

isopropylidene. $R_1$-$R_8$ are each independently hydrogen, halo, hydrocarbyl, hydrocarbyloxy, or inertly substituted hydrocarbyl or hydrocarbyloxy groups. $R_1$-$R_8$ are preferably hydrogen, chloro or bromo, and are more preferably hydrogen.

If one chooses to use an epoxy resin having on the average more than one epoxy group per molecule and wishes to reduce its functionality, this can be accomplished by reacting some of the epoxy groups with a capping group, for example, a carboxylic acid or anhydride, a phenol or an alcohol or even by hydrolyzing some of the epoxy groups. In these instances, we prefer to cap the resin with an alkylphenol having from 4 to 18 carbons in the alkyl group, preferably 8 to 10 carbons located predominantly in the meta or para ring position, or with other such reagent which provides a hydrophobic terminal group bonded through an alkali resistant linkage, preferably an ether linkage. This type of capped resinous epoxide, which is generally a statistical mixture of resinous epoxides, is extremely valuable as a reactant in forming our water-compatible pyridinium compositions which have an alkali resistant backbone structure and capping group. Such products are particularly useful in cathodic electrodeposition and as binders for corrosion resistant primers on steel. During cathodic electrodeposition, the surface of the cathode is a highly alkaline environment which can cause certain polymers to degrade. Also, during active corrosion on steel a highly alkaline environment is created in the vicinity of the corroding front. The alkalinity softens, swells and chemically attacks conventional, normally ester-containing, resin binders leading to



BAD ORIGINAL

a loss of adhesion and eventual paint failure. It is therefore important that resins used in this invention have a backbone made of an alkali resistant structure, that is, one that resists degradation or swelling in the corrosion environment. Resin structures bearing, for example, ester groups, epoxy groups or glycol ether groups in addition to at least one pyridinium group are included within the scope of this invention and such materials can be satisfactorily utilized as coating compositions and in electrodeposition. The alkylphenol capped resins, however, have superior performance in an alkaline environment and are, therefore, preferred when the novel pyridinium resins are to be used in cathodic electrodeposition and/or as binders for corrosion resistant coatings on steel.

Resins with a limited amount of branching can be used particularly where capping is employed to reduce functionality. Such resins can be obtained by using small amounts of novolaks or polyphenols in the preparation of the resin. The amounts are selected such that there is no significant interference with solubility and flow out. Resins of the foregoing description are considered within the term linear.

The pyridines, of course, constitute a known class of compounds encompassing a wide variety of heterocyclic 6-membered compounds with a nitrogen atom included in the aromatic ring as the sole hetero atom. Pyridine per se, $C_5H_5N$, is the first member of the series. Inertly-substituted pyridines can also be used. Such substituted pyridines normally correspond to the formula:

BAD ORIGINAL

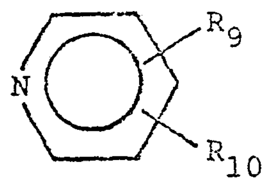

wherein $R_9$ and $R_{10}$ are each independently hydrogen, halo, hydrocarbyl, inertly-substituted hydrocarbyl or other inert substituents. By "inert" in every instance is meant that the substituent is inert in the process of forming the novel pyridinium resins. Preferred pyridines are those in which $R_{10}$ is hydrogen and $R_9$ is hydrogen or a substituent in the 3- or 4-ring position; more preferred are those in which $R_{10}$ is hydrogen and $R_9$ is hydrogen or 4-methyl. Examples of suitable such substituted pyridines include: 3-hydroxymethylpyridine; 3-methoxypyridine; 2-fluoropyridine; 3-chloropyridine; 3,5-dichloropyridine; 2-methylpyridine; 3-methylpyridine; 4-methylpyridine; 3,5-dimethylpryidine; 2-vinylpyridine; 4-vinylpyridine; 4-phenylpyridine; nicotinamide and 3-(3-pyridyl)-1-propanol.

Substantially any Brönsted acid can be used in forming the novel pyridinium compounds so long as the acid is sufficiently strong to promote the reaction between the pyridine and the vicinal epoxide group(s) on the resinous reactant. Monobasic acids are normally preferred. Suitable inorganic acids include, for example, phosphoric acid, hydrochloric acid, hydrobromic acid, nitric acid and sulfuric acid. Suitable organic acids include, for example, alkanoic acids having from 1 to 4 carbon atoms such as, for example, acetic acid and propionic acid, alkenoic acids having up to 5 carbon atoms such as acrylic acid, methacrylic



BAD ORIGINAL

acid, itaconic acid and maleic acid, hydroxy-functional carboxylic acids such as glycolic acid, lactic acid and citric acid and organic sulfonic acids such as methanesulfonic acid. The acid in this reaction has two important functions. First, it promotes the reaction between the pyridine and the vicinal epoxy group on the resinous reactant. Second, the acid provides a compatible anion in the final product. Presently preferred acids are lower alkanoic acids of 1 to 4 carbon atoms and acrylic acid with acetic acid being most preferred. The anion can be exchanged, of course, by conventional anion exchange techniques. See, for example, U.S. Patent No. 3,959,106 at column 19. Preferred anions are chloride, bromide, bisulfate, bicarbonate, nitrate, dihydrogen phosphate, lactate and alkanoates of 1-4 carbon atoms. Acetate is the most preferred anion.

The ratio of epoxy-containing reactant/-pyridine reactant/Brönsted acid is variable so long as the reaction mixture is at a neutral or acid pH. The reactants react in the proportions of 1 equivalent of pyridine and 1 equivalent of acid per vicinal epoxy group converted.

The relative amounts of reactants used depends upon the acid strength. Pyridines are very weak bases and form salts with strong acids. We have observed, for example, that reactions in which hydrochloric acid is added as pyridinium hydrochloride, the major product is the corresponding chlorohydrin. This result is, of course, the basis for using pyridinium hydrochloride to quantitatively determine the epoxy content of resins



BAD ORIGINAL

by the analytical technique described by Siggia in "Quantitative Organic Analysis Via Functional Groups" at page 242 (1963) and cited, for example in U.S. Patent No. 3,959,106 as showing the analytical standard in the art. This is a very important fact because it distinguishes pyridine from tertiary amines in this reaction and is one factor that makes the instant invention unobvious.

In order to form the instant pyridinium compounds from strong acids, an excess of pyridine is employed. For example, excellent results were achieved using from 2 to 5 equivalents of pyridine per acid equivalent. With weaker acids such as phosphoric acid, good results have been achieved by using substantially stoichiometric amounts of reactants although a slight excess or deficiency of the epoxy-containing reactant or pyridine can be used. With still weaker acids such as acetic acid, a slight excess of acid is preferred to maximize the yield of pyridinium salts. Good results have been achieved using a ratio of 1.1 equivalents of weak acid and one equivalent of pyridine per epoxy equivalent. The amount of water that is also included in the reaction mixture can be varied to convenience so long as there is sufficient acid and water present to stabilize the pyridinium salt form during the course of the reaction. Normally, it has been found preferable to include water in the reaction in amounts of from 10 to 30 moles per epoxy equivalent.

It has also been found advantageous to include minor amounts of water-compatible organic solvents in the reaction mixture. The presence of such solvents tends to facilitate contact of the reactants and thereby



BAD ORIGINAL

promote the reaction rate. In this sense, this particular reaction is not unlike many other chemical reactions and the use of such solvent modifiers is conventional. The skilled artisan will, therefore, be aware of which organic solvents can be included. One class of solvents that we have found particularly beneficial are the monoalkyl ethers of the $C_2$-$C_4$ alkylene glycols. This class of compounds includes, for example, the monomethyl ether of ethylene glycol and the monobutyl ether of ethylene glycol. A variety of these alkyl ethers of alkylene glycols are commercially available.

The reaction is normally conducted by merely blending the reactants together and maintaining the reaction mixture at an elevated temperature until the reaction is complete or substantially complete. The progress of the reaction is easily monitored. The reaction is normally conducted with stirring and is normally conducted under an atmosphere of inert gas such as nitrogen. Satisfactory reaction rates have been observed at temperatures of from 25°C to 100°C with preferred reaction rates being observed at temperatures from 60°C to 80°C.

The products produced by this reaction of a pyridine with a resinous epoxy-containing reactant having for purposes of illustration an average of one vicinal epoxy group per molecule in the presence of acid and water are, of course, included within the novel class of water-compatible pyridinium compositions. This reaction product will typically comprise a statistical distribution of compounds in which most of the resinous molecules will contain one terminal pyridinium



BAD ORIGINAL

group, a minor amount of the resinous molecules will be nonionic species, and a minor amount of resinous molecules will bear two terminal pyridinium groups. This statistical distribution flows in part from the fact that the epoxy-containing resinous compounds are themselves resinous mixtures with the epoxy number being merely an average and in part from incomplete and/or competing reactions (i.e., hydrolysis or esterification). The significant point is, however, that the presence of such nonionic species is not detrimental in forming and/or using the artificial latexes and their presence can be advantageous. Particularly useful pyridinium-modified resinous mixtures derived from epoxy-containing resins are those in which the average number of pyridinium groups per molecule of resinous compound is less than one. If desired, the components in the product mixture can be isolated by conventional fractionation methods, e.g., by fractional precipitation or by gradient elution chromatography.

Solvents have a variety of uses in the preparation of the novel pyridinium-modified resins, in the preparation of artificial latexes from the pyridinium-modified resins, and in the formulation of the electrocoating baths. In making the pyridinium-modified resins, the primary purpose of the solvent is to control the viscosity of the reaction mixture and the compatibility of the components. Normally, one selects a solvent which will perform this function and also be compatible with the final electrodeposition formulation. In practice, these solvents are commercially available and are quite good in plasticizing the resin, reducing the viscosity of the resin, and also facilitating the formation of latexes by acting as coupling solvents.



BAD ORIGINAL

The amount of solvent used will depend upon the molecular weight or, perhaps more strictly, on the viscosity of the epoxy-containing resinous reactant and upon the charge density (milliequivalents per gram) on the final pyridinium-modified resinous product. The more difficult the pyridinium-modified resin is to emulsify, the higher the level of solvent that is desirable in the formulation. Normally, solvent levels can be varied from zero up to 50 weight percent, based on resin solids.

In making artificial latexes, conventional plasticizing solvents are not normally required or employed; but, they do not have to be excluded either. Solvents such as 2-ethylhexanol which remain predominantly in the oil phase and soften the polymer particles can be used but their primary function and utility is in the electrodeposition process rather than in the emulsificiation. Normally, the artificial latexes are made by dispersing the resins in water at elevated temperatures and the polymer particles are thus softened by heat.

Cross-linking of the water-compatible compositions of this invention can be achieved through residual epoxy groups, but we have found it preferable to conduct the reaction in such a way as to render the water-compatible composition substantially epoxy-group free and to achieve cross-linking through the free aliphatic hydroxyl groups or other functional sites in the molecule. A variety of conventional techniques have been used to cross-link hydroxy-containing materials using water-insoluble cross-linking agents such as amine/aldehyde condensates with an acid catalyst and can be used here, but we have found that best



BAD ORIGINAL

cross-linking of the water-compatible compositions is achieved using blocked isocyanates which do not require an acid catalyst. These cross-linking agents are polyisocyanates having two or more isocyanato groups which have been reacted with an alcohol, normally, to give a urethane moiety which is stable and unreactive with hydroxyl groups at room temperature but reactive with hydroxyl groups at elevated temperatures. Cross-linking results when the isocyanato groups are thermally deblocked and subsequently react with moieties bearing active hydrogen on the resin molecules to form stable or urethane type linkages. The blocking alcohol group that is released at elevated temperatures can be removed as a volatile gas or can remain in the cross--linked coating. In many instances, the blocking alcohol can be chosen such that it becomes a "plasticizer" in the cross-linked coating and thereby enhances the appearance of the coating. A wide variety of blocked isocyanate cross-linking agents are known in the art. Preferred blocked isocyanate cross-linkers are those in which the blocking alcohol is 2-ethylhexanol. A most preferred blocked isocyanate cross-linking agent is toluene diisocyanate blocked with 2-ethylhexanol. Another most preferred blocked isocyanate is the reaction product of one mole of glycerin with 3 moles of propylene oxide which is then reacted with approximately 45 percent excess toluene diisocyanate and then all free isocyanate groups capped with 2-ethylhexanol. The excess toluene diisocyanate can be removed from the oxyalkylene derivative before use or the mixture can be used.

In cases where the active hydrogen functionality in the resin is low, it is preferred to use a more highly functional blocked isocyanate having, for example, three or more active sites.

These fully blocked polyisocyanate cross-linking agents are dispersible in or with the pyridinium-containing water-compatible compositions. The blocked isocyanate cross-linking agent can also be included, however, by chemically bonding the cross-linking agent to the resinous molecule prior to the formation of a dispersion. This can be achieved, for example, by reacting a half blocked polyisocyanate, such as the reaction product of equal molar amounts of toluene diisocyanate with 2-ethylhexanol, with an epoxy-containing resinous molecule having free hydroxyl groups to thereby form a resinous epoxy-containing molecule bearing a blocked isocyanate chemically bound to the resin molecule through a urethane linkage, and subsequently reacting this epoxy-containing material with a pyridine and acid as set forth above. The reaction of a partially blocked isocyanate with an epoxy-containing resinous molecule having free hydroxyl groups is known in the art.

When using a blocked isocyanate cross-linker, it is also useful to include a urethane catalyst in the coating compositions. A wide variety of urethane catalysts are known and are suitable for use herein. Representative members of urethane catalysts include, for example, dibutyltin dilaurate, dioctyltin dimercaptide, dimethyltin dimercaptide, cobalt naphthenate and zinc 2-ethylhexanolate. The presently preferred catalyst is dibutyltin dilaurate.



BAD ORIGINAL

When the water-compatible compositions are to be used as coating compositions, they can be formulated with conventional additives, if desired. For example, antifoam agents, pigments, flow control agents, coupling solvents, coalescing solvents or plasticizers can be included so long as such materials are inert to the pyridinium-containing resinous materials. These conventional additives are well-known classes of compounds as illustrated in U.S. Patent No. 3,962,165.

We have observed that the water-compatible compositions of this invention having a charge/mass ratio of from 0.6 to 3 milliequivalents of pyridinium nitrogen per gram of resin solids (meq/g) are unusually effective as dispersants for pigments. Pigments used in electrocoating compositions form a known class of compounds comprising inorganic and/or organic pigments. This known class is illustrated by the pigments named in U.S. Patent No. 3,936,405 and U.S. 4,035,275. The inorganic pigments such as titanium dioxide, magnesium silicate, black iron oxide, aluminum silicate, china clay, lead silicate or carbon black are the best known and most widely used in coating compositions, and are therefore preferred to use herein. In making such dispersions, a sufficient amount of the water-compatible, preferably water-soluble, compositions is used to make a dispersion which is stable in a cationic environment. We have also observed that when such pigment dispersions are to be used in compositions for cathodic electrodeposition that the performance of the coating is enhanced by the inclusion of corrosion inhibiting pigments. Corrosion inhibiting pigments, that is, pigments which increase the corrosion inhibitive effect

of coatings containing such pigments are represented, for example, by zinc yellow, basic zinc chromate, strontium chromate, calcium chromate, barium chromate, red lead and basic lead silico chromate. For illustration, electrodeposited coatings containing the compositions of this invention and a lead silicate tended to be more corrosion resistant as measured by a salt fog test--ASTM Method B-117.

The water-compatible compositions of this invention can be used as coating compositions applied by conventional techniques such as dipping, spraying, brushing or roll coating, but have particular utility in application by cathodic electrodeposition. In coating applications, the water-compatible compositions are normally thinned with water to form aqueous solutions or more generally dispersed in water to form latexes which can include the cross-linker and inorganic pigments. When used in electrodeposition, the formulation will normally have a charge/mass ratio of from 0.2 to 0.5 milliequivalent of pyridinium nitrogen per gram of solid, total resin solids basis. These compositions are then used as the electrocoating bath in a manner known in the art.

In the electrodeposition bath, the current cut off depends upon the polymer particles coalescing sufficiently to form a nonconductive film on the cathode surface at the temperature on the cathode surface; this temperature is probably somewhat higher than the bath temperature but well below the boiling point of the aqueous medium. It has been reported in the literature that the electrode surface temperatures typically will reach about 60°C during electrocoating when the current is flowing.



BAD ORIGINAL

The conductivity of the bath used in electrodeposition is important. One of the significant advantages of the invention is the ease of control of conductivity and simpler control of the bath. In conventional water-soluble electrodeposition systems like the carboxylated alkyds, the conductivity of the bath is affected to a great extent by the dissolved resin molecules which have a high charge density and can carry current. In such instances, the conductivity can be easily manipulated by simply changing the pH. Thus, small changes in pH during the electrodeposition process alter the conductivity and also affect considerably the electrodeposition behavior of the bath. Such conventional systems lack the desirability of being able to balance the pH and the conductivity independently. With the artificial latexes of this invention, the conductivity can be adjusted simply by adding a compatible, water-soluble electrolyte. Since the ability of the polymer particle to carry charge is somewhat limited, the dispersed resin particle is not a particularly good electrical conductor and the charge on the polymer is pH independent, the pH and the conductivity can be adjusted independently. Addition of the electrolyte also contributes to high current density which is needed for good electrodeposition. In the absence of sufficient conductivity and current density, the current cut off is normally poor and the resin particles from such baths tend to deposit in the form of loosely-knit, water-swollen gels which slough away from the surface as it is rinsed. However, this is not a problem with the resinous compounds of this invention because of the ease of adjustment noted above.

BAD ORIGINAL

Should additional conductivity be required, small amounts of water-soluble pyridinium resins can be added or another compatible water-soluble electrolyte can be included, such as, for example, ammonium bicarbonate, N,N-diethyl-N-betahydroxyethylammonium formate or zinc acetate. The anions of such electrolytes may be selected from the same kinds which are suitable as the counterion for the pyridinium cation required for the process. The cations of the supporting electrolyte salts should be selected so as not to interfere with the electrodeposition of a resin at the cathode. Undesirable cations include the alkali metal ions and calcium ions, which can be tolerated, however, at low concentrations, i.e., less than about 0.002 normal. In general, such undesirable ions have electrode potentials more negative than -2.40 volts as defined at pages 414 and 415, with values being listed from page 415 through page 426, of The Encyclopedia of Electrochemistry, Clifford A. Hampel, Editor, Reinhold Publishing Corporation, New York, 1964. A bath conductivity of from 600 to 3500 micromhos per centimeter at 25°C is normally satisfactory, but 1000 to 2500 is preferred.

Use of the novel water-compatible compositions in forming electrodepositable coatings results in substantial advantages over the seemingly similar quaternary ammonium-containing compositions for electrodeposition.

Aqueous electrocoating formulations comprising pyridinium-containing water-compatible compositions of this invention are characterized by uniform deposition, fast current cut off, low drag out, high throwing power, and high rupture voltages above about 350 volts.



BAD ORIGINAL

Further, these pyridinium-containing water-compatible compositions do not generate tertiary amines or major amounts of pyridine during electrodeposition or cure but rather retain the nitrogen in the coating. Electrodeposition of those pyridinium compounds results in cleavage of the pyridinium ring at the high pH observed at the cathode surface which, in turn, results in the production of a primary amine. This primary amine is chemically bound to the electrodeposited resin and serves as a reaction site for cross-linking. Further, electrodeposition of those pyridinium-containing compositions forms a dense cohesive coating of coalesced resin particles on the surface of the cathode immediately upon electrodeposition. This is highly desirable because it holds the electrocoated material in place until cross-linking can be effected. Surprisingly, the coating contains little, if any, entrained ionic component, as evidenced by the rapid current cut off.

Most electrodeposition processes will utilize auxiliary equipment having metal parts susceptible to corrosion by the bath itself at acid pH. The amine/acid salts tended to be very corrosive, the quaternary ammonium salts are alleged to be less corrosive but are still at an acid pH, and the instant pyridinium-containing compositions are also less corrosive because they can be used at a neutral or essentially neutral pH such as from 6 to 8 and therefore superior. Thus, the instant pyridinium-containing compositions are superior in terms of their performance during application, superior in their performance relative to corrosivity of the mechanical components of the bath and give

superior properties in the electrodeposited and cross--linked coatings. None of these results would have been expected from review of the prior literature by a skilled artisan.

The following examples will further illustrate the invention. All "parts" are parts by weight.

Example 1

A commercial liquid epoxy resin having an epoxy equivalent weight of 186 (essentially the diglycidyl ether of bisphenol A; marketed by The Dow Chemical Company under tradename D.E.R. 331) (19.63 parts), a commercial grade of bisphenol A (9.03 parts) and nonylphenol (1.95 parts) were added to a reaction vessel and thoroughly mixed at a temperature of approximately 45°C. A small but catalytic amount of ethyltriphenylphosphonium acetate/acetic acid complex dissolved in methanol was added and thoroughly mixed to the reaction mixture; this catalyst was added in amounts of approximately 0.09 weight percent, based on the total weight of the mixture. The reaction vessel and contents were then heated until a temperature exotherm as observed and external heating removed. The temperature of the reaction mixture peaked at 172°C. The reaction mixture was then heated at 165°C for approximately one hour after the exotherm had subsided. The product was essentially a linear condensation polymer of the diglycidyl ether of bisphenol A and bisphenol A, partially capped with nonylphenoxy groups and having terminal vicinal epoxy groups with an epoxide content of 2.39 weight percent as analyzed by the perchloric acid technique set forth in Lee and Neville, supra, pp. 4-14, 15. A portion of



BAD ORIGINAL

this reaction mixture (7.2 parts) was removed for analytical purposes. Monobutyl ether of ethylene glycol (6.38 parts) was added to the remainder of the reaction mixture as the mass cooled to between 70° and 75°C.

Terminal epoxy groups were converted to terminal pyridinium groups in the following manner: a solution of pyridine (1 part), acetic acid (0.83 part) and water (2.25 parts) was slowly added to the stirred reaction product from the above step; the temperature was maintained at approximately 75°C and the addition required approximately 35 minutes. Additional water (2.25 parts) was then added to the reaction mixture with stirring. The stirred reaction mass was maintained between 70° and 80°C for approximately 7.5 hours. The resulting liquid product was a water--dispersible composition having a charge density of 0.42 milliequivalent of pyridinium per gram of nonvolatiles and having an average of 0.86 pyridinium group per molecule. The average number of pyridinium groups per molecule was calculated by dividing the molecular weight of the resin (2044) by the equivalent weight per pyridinium group (2381). The pH of the liquid product was between 4 and 5.

A formulated artificial latex was prepared by blending the above reaction product with a water--insoluble blocked isocyanate cross-linking agent (6.35 parts; the reaction product of 1 mole of glycerin with 3 moles of propylene oxide to which was added 4.5 moles of toluene diisocyanate, subsequently blocked completely with 2-ethylhexanol), a polyacrylate flow control agent (0.11 part; Modaflow, a product of Monsanto Chemical Company), monobutyl ether of ethylene

BAD ORIGINAL

glycol (0.11 part) and dibutyltin dilaurate (0.28 part) with mixing at between 65° and 70°C. The mixture was dispersed in water by the method of phase-inversion emulsification, that is, after the mixture was thoroughly blended, water was slowly added to the reaction mixture at a rate that good mixing was facilitated. The viscosity of the mixture decreased abruptly at about 45 weight percent of nonvolatiles. The solids content of the emulsion was further reduced to about 38 weight percent with additional water. A smooth uniform latex, known as Formulation 1A was thus formed and subsequently cooled to room temperature. This formulated latex can be applied to steel panels by conventional techniques as a primer coat. For example, the latex was applied to a panel of cold rolled steel using a wire-wound draw down bar, and the coating baked for 30 minutes at 177°C which resulted in a 1 mil (0.03 mm) dry film having excellent hardness and solvent resistance. Solvent resistance was measured by rubbing back and forth over the same area of the coated panel a cotton swab soaked in methyl ethyl ketone (MEK) and wrapped around the ball end of a two-pound (0.9 kg) ball peen hammer having a ball diameter of 1.25 inches (38.1 mm); a back and forth stroke being referred to as a "double rub" In this instance, the cured film survived over 100 double rubs without the integrity of the film breaking down to expose bare metal.

Formulation 1A was further reduced to 15 weight percent solids with water and the pH was adjusted to 7.25 by adding a sufficient quantity of 10 weight percent aqueous N,N-diethylethanolamine. This formulation was known as Formulation 1B. The conductivity of Formulation 1B was about 1500 micromhos per centimeter

at approximately 25°C. Panels (4" x 12") (102 mm x 305 mm) of untreated, cleaned cold rolled steel were electrocoated by immersing the panels into an electrocoating bath consisting of 3 liters of Formulation 1B and using the panels as a cathode 2" (51 mm) from a carbon anode in this electrocoating bath. A voltage of 200 volts was then applied for two minutes. The panels were removed from the bath, rinsed with deionized water and baked for 30 minutes at 177°C. The resulting panel had a smooth hard uniform film of about 0.4 mil (0.1 mm) thickness coating the panel.

Similar results were obtained by using cellulose acetate butyrate or a solid epoxy resin having a molecular weight of about 30,000 (sold by The Dow Chemical Company under the tradename D.E.R. 684 EK40) instead of Modaflow or by substituting 4-methylpyridine for pyridine in the reaction of Example 1.

Likewise, substantially equivalent results were achieved in a similar experiment where lactic acid was used in place of acetic acid; it was noted, however, that the film appearance visually appeared to be somewhat smoother.

Somewhat lower conversions were obtained in similar experiments using 2-methylpyridine and 3,5--dimethylpyridine instead of pyridine.

Example 2

Another water-dispersible composition having excellent coating properties was prepared in a similar manner from a higher molecular weight epoxy resin. Here, an epichlorohydrin/bisphenol A condensation product (3,000 parts) having a molecular weight of

approximately 3500 and 2.49 weight percent epoxide content was dissolved in monobutyl ether of ethylene glycol (750 parts) at a temperature between 100° and 130°C. This reaction mixture was cooled to approximately 80°C and pyridine (137.4 parts), acetic acid (114.6 parts) and water (312.7 parts) was added incrementally over a 20-minute period with stirring. The reaction mixture was subsequently maintained at 80°C for two hours with continual stirring. A portion (448.2 g; 75.3 weight percent nonvolatile) of the product was blended with the blocked isocyanate identified in Example 1 (201.6 parts; 55.8 weight percent nonvolatile; excess toluene diisocyanate removed by extraction before blocked with 2-ethylhexanol), Modaflow (1.6 parts), monobutyl ether of ethylene glycol (1.6 parts) and dibutyltin dilaurate (4.5 parts) were thoroughly blended at 60°C. Deionized water was then added slowly with stirring until the resinous mixture inverted to form an oil-in-water emulsion. After the material had inverted, the heat was removed and additional water added until a 15 weight percent solids latex was reached. The pH was adjusted to approximately 7.2 and a conductivity of approximately 2000 micromhos per centimeter was measured. This was then used as the electrocoating bath in which three panels of untreated, unpolished cold rolled steel were used as the cathode by the method set forth in Example 1. After this, the panels were removed from the bath, rinsed with deionized water and baked for 30 minutes at 177°C. The panels thus prepared had a thin, uniform coating of approximately 0.6 to 0.7 mil (0.15 to 0.18 mm) thickness having excellent hardness and solvent resistance. The salt spray resistance of the film was measured following the procedure of ASTM



BAD ORIGINAL

Method B-117. After 192 hours in the salt spray test, the creep measured across the scribe was 1/4 inch (6 mm) on each of the three panels. After 336 hours, the creep measured from 7/32 to 1/2 inch (5.6 to 12.7 mm). The solvent resistance was measured by the test set forth in Example 1; the coating survived more than 200 MEK double rubs.

Essentially equivalent results were obtained when the amount of blocked isocyanate cross-linker was increased from 201.6 parts to 241.9 parts.

Example 3

A water-soluble composition having unusually good properties as a pigment-dispersing agent for inorganic pigments was prepared as follows: an epichlorohydrin/bisphenol A condensation product having a molecular weight of approximately 1050 and an epoxy content of 8.14 percent (sold by The Dow Chemical Company under the tradename D.E.R. 661) (928.2 parts) and monobutyl ether of ethylene glycol (103.13 parts) were blended in a reaction vessel with stirring under a nitrogen atmosphere. The reaction kettle and contents were heated to 75°C and a mixture of pyridine (139.06 parts), acetic acid (116.02 parts) and water (316.78 parts) was slowly added to the reaction mixture. After the addition was complete, the temperature of the reaction mixture was raised to 80°C and the reaction mixture maintained at this temperature with stirring for 1.5 hours. The resulting product, known as Solution 3A, was a clear, viscous, soapy liquid which can be easily diluted with water to form an essentially clear liquid, indicating the water-solubility of the resinous product. This product had a charge/mass ratio of 1.14 meq/g and a nonvolatile content of 37 weight percent.



BAD ORIGINAL

A pigment grind, known as Pigment Grind 3B, was prepared by blending an aliquot of Solution 3A (30 parts) with water (91 parts), acetic acid (1.5 parts), magnesium silicate (58.3 parts), lead silicate (16.7 parts), carbon black (8.3 parts) and lead silico chromate (16.7 parts) in a sand mill. The materials were blended together for approximately 0.5 hour and the pigment grind recovered. This pigment grind was likewise a smooth uniform dispersion having a pigment/dispersant ratio of 9 and was approximately 50 weight percent solids.

Other pigment grinds at 50 weight percent solids were prepared essentially as shown above except the pigment used was (a) $Fe_2O_3$, (b) $TiO_2$, (c) a carbon black/basic lead silicate or (d) a carbon black/basic lead silicate/magnesium silicate mixture. All pigment grinds thus produced passed a Hegman grind of 7, showing a very good grind was formed. The shelf stability of these grinds was also good, and showed only minor amounts of hard pigment settling out even after several days.

A composition for use in cathodic electrodeposition was prepared by blending 177 parts of Pigment Grind 3B with approximately 3000 parts of Formulation 1B to give an emulsion having approximately 15 weight percent pigment, based on the total weight of solids. This material was electrocoated onto cold rolled steel panels as per Example 1. The panels were removed, rinsed with deionized water and baked at 177°C for 30 minutes. The panels were thus coated with a hard uniform coating having excellent solvent resistance and excellent salt spray resistance. The coating survived more than 100 MEK double rubs and had a total creep of less than 1/8 inch in three weeks.



BAD ORIGINAL

Example 4

This example is an embodiment of the invention where a blocked isocyanate cross-linking agent is chemically bound to the resin molecule. In this experiment, the epoxy resin of Example 1 (1115.87 parts), bisphenol A (484.13 parts), ethyltriphenylphosphonium acetate/acetic acid complex (1.59 parts of a 70 weight percent solution in methanol) and toluene (282.35 parts) were blended in a reaction vessel with stirring under a nitrogen atmosphere. The reaction mixture was warmed until a temperature exotherm was observed and external heating was then removed. The exotherm temperature reached a maximum of 222°C, after which the mixture was allowed to cool. An aliquot of this resin (121.17 parts) was added at 90°C to a reaction vessel containing toluene diisocyanate (178.83 parts) with stirring. The reaction mixture was thoroughly blended and reheated to 70°C until the reaction between the isocyanate groups on the toluene diisocyanate and the aliphatic hydroxyl groups on the resin was complete. The course of the reaction was determined by following the increase of the peak in the infrared spectrum at 1737 wavenumbers until it reached a constant optical density. The resin thus produced was washed with hexane until a white powdery solid was obtained. This solid was recovered by filtration and a portion (164 parts) combined with 2-ethylhexanol (113.07 parts) in a reaction vessel under a nitrogen atmosphere. This reaction mixture was stirred at between 50° and 60°C until the infrared peak at 2280 wavenumbers disappeared. The resinous material thus obtained had an epoxy content of 2.61 weight percent. This reaction mixture was then blended with pyridine (7.91 parts), water (18.2 parts) and

acetic acid (6.6 parts) and the mixture maintained at 70°C with stirring for 4.33 hours. The reaction mixture was permitted to cool and the material analyzed.

A portion of the above resin (196 parts) was blended with a minor amount of Modaflow (0.8 part), monobutyl ether of ethylene glycol (0.8 part) and a catalytic amount of dibutyltin dilaurate (2.3 parts). A latex was prepared by warming the resulting mixture with stirring and adding water until an inversion was obtained. The formulation was electrocoated as described above in Example 1 at 14 percent solids. The panels were rinsed and baked for 30 minutes at 177°C. The panels were thus coated with a thin uniform hard coating having good solvent resistance to methyl ethyl ketone. The salt spray resistance was not measured.

Example 5

This reaction shows an alternate process for preparing the novel pyridinium compounds. The epoxy resin of Example 3 was reacted with hydrochloric acid to give the corresponding chlorohydrin. Fifty g of this chlorohydrin was blended with 50 g of pyridine and stirred at room temperature overnight. A clear solution resulted. The reaction mixture was then heated to 70°C and maintained at this temperature for four hours with stirring. The reaction product was then cooled and analyzed for chloride content. It contained 0.11 milliequivalent of chloride per gram of sample. The reaction mixture was then heated to 85°C and 20 milliliters of water were slowly added with stirring over a two-hour period. The resulting clear solution was allowed to stand at 85°C overnight.



BAD ORIGINAL

After cooling, a 1.02 g sample was titrated for chloride content and found to contain 0.6 milliequivalent of chloride per gram of sample.

The reaction mixture was poured into acetone which caused the product to precipitate as a fine white powder which was subsequently recovered by filtration and dried in a vacuum oven for 20 hours at 25°C. The dried product weighed 53.5 g and contained 1.28 milliequivalents of chloride per gram of solids.

A portion of the product (10.5 g) was then blended with 100 g of HT clay, 15 g of basic lead silicate, 5 g of monobutyl ether of ethylene glycol in 120 g of water in a ball mill. After two hours mixing, a low viscosity smooth pigment grind was thus obtained. The solids level was 48.4 percent by weight. This pigmented material was coated onto a steel panel (Bonderite 37) with a wire-wound Meyer rod and the coated panel heated at 160°C for 15 minutes. A smooth low gloss coating was thus obtained.

Example 6

A branched product was formed by reacting an epoxy novolac resin (sold by The Dow Chemical Company under the tradename D.E.N. 438) having an epoxy functional equivalent of approximately 3.5 (872.4 g) with an industrial grade bisphenol A (127.6 g) and nonylphenol (576.5 g) in the presence of a 70 weight percent solution of ethyl triphenylphosphonium acetate/acetic acid complex (1.25 g initially and additionally 0.62 g after one hour of reaction time) under conditions similar to those of Example 1 to thereby give a partially capped resin having an epoxide content of 3.47 percent after four hours.

BAD ORIGINAL

A portion of the partially capped resin (1115 g) was then diluted with monobutyl ether of ethylene glycol to form a 90 weight percent solution. The temperature of this solution was then cooled to 70°C and a mixture of pyridine (53.4 g), acetic acid (51.3 g) and water (323.4 g) was then added to the stirred resin solution. This reaction was then maintained at 70°C for approximately five hours. A water-dispersible pyridinium-containing reaction product was thus formed which blended easily with dibutyltin dilaurate and the blocked isocyanate cross-linking agent of Example 1 to give an electrodepositable composition which was electrodeposited and cured under similar conditions to give a film of 0.5 mil (0.1 mm) thickness having a smooth finish.

Example 7

The epoxy resin of Example 1 (63.0 parts), bisphenol A (26.8 parts) and nonylphenol (10.2 parts) were added to a reaction vessel and thoroughly mixed at a temperature of approximately 45°C. A small but catalytic amount of ethyltriphenylphosphonium acetate/acetic acid complex dissolved in methanol was added to the reaction mixture and thoroughly mixed; this catalyst was added in an amount of approximately 0.09 weight percent, based on the total weight of the mixture. The reaction vessel and contents were then heated until a temperature exotherm was observed and external heating removed. The temperature of the reaction mixture peaked at 172°C. After the exotherm had subsided, the temperature of the reaction mixture was controlled at 165°C for approximately one hour. The product was essentially a linear condensation polymer of the diglycidyl ether of bisphenol A and bisphenol A, partially capped with nonylphenoxy groups and having



BAD ORIGINAL

0014851

terminal vicinal epoxy groups with an epoxide content of 2.47 weight percent. Monobutyl ether of ethylene glycol (15.0 parts) was added to the reaction mixture as the mass cooled to between 70° and 75°C.

Terminal epoxy groups were converted to terminal pyridinium groups in the following manner: a solution of pyridine (3.38 parts), aqueous lactic acid at 85 percent concentration (4.88 parts) and water (25.7 parts) was slowly added to the stirred reaction product from the above step; the temperature was maintained at approximately 70°C and the addition required approximately 35 minutes. The stirred reaction mass thereafter was maintained at between 70° and 80°C for approximately six hours. This reaction product, when cooled, had a pH between 4 and 5.

A formulated artificial latex was prepared by blending a portion of the above reaction product (100 parts) with a water-insoluble blocked isocyanate cross-linking agent (35.2 parts, the reaction product of 1 mole of toluene diisocyanate with 2 moles of 2-ethylhexanol), cellulose acetate butyrate, CAB 551-0.01, as a 40 percent solution in methyl isobutyl ketone (3.29 parts) and dibutyltin dilaurate (1.75 parts) with mixing at between 65° and 70°C. The mixture was dispersed in water by phase-inversion emulsification, i.e., after the mixture was thoroughly blended, water was slowly added to the reaction mixture at a rate that facilitated good mixing. The viscosity of the mixture decreased abruptly at about 45 weight percent of nonvolatiles, indicating phase inversion.

BAD ORIGINAL

The resulting formulation was reduced to 15 weight percent solids with water and the pH was adjusted to 7.25 by adding a sufficient quantity of 10 weight percent aqueous solution of N,N-diethylethanolamine. The conductivity of this formulation was about 1300 micromhos per centimeter at approximately 25°C. Panels (4" x 12") (102 mm x 305 mm) of untreated, cleaned cold rolled steel were electrocoated at a voltage of 200 volts for two minutes. The panels were removed from the bath, rinsed with deionized water and baked for 30 minutes at 177°C. The resulting panel had a coating of an extremely smooth and hard, uniform film of about 0.4 mil (0.1 mm) thickness having excellent appearance. The cured coating on the panel had solvent resistance in excess of 100 MEK double rubs.

The molecular weights and molecular weight distribution of epoxy resins are determined by conventional techniques. The most frequently used technique, however, is gel permeation chromatography utilizing a polystyrene standard or other standard, as illustrated by the series of papers by H. Batzer and S. A. Zahir (the first of which was published in the Journal of Applied Polymer Science, Vol. 19, 585-600 (1975)). The pyridinium concentration can also be determined by conventional analytical techniques. Alternatively, the pyridinium concentration can be determined by titrating for the counterion or by isolating unreacted pyridine by liquid chromatography techniques using a precolumn to separate cationic resinous components from the unreacted pyridine. Unreacted pyridine can also be separated from the pyridinium-containing resin by freeze-drying and analyzing the pyridine content of volatiles using

BAD ORIGINAL

liquid chromatography. Particle size of the unpigmented emulsions, for example, can be determined by conventional light scattering techniques. Other analytical techniques for analyzing cationic polymers are known in the art.

BAD ORIGINAL

1. A water-compatible composition comprising at least one resinous compound whose backbone is linear and contains at least one oxyaryleneoxyalkylene or oxyaryleneoxy(1,3-(2-hydroxy)alkylene) unit and which bears at least two functional organic moieties through which cross-linking can occur characterized in that the resinous compound contains at least one terminal pyridinium group covalently bonded through the pyridinium nitrogen atom, the composition having a pH of less than 10.

2. The composition of Claim 1 characterized by additionally containing a minor amount of at least one resinous compound having a backbone of like structure terminated with nonionic groups and a minor amount of at least one resinous compound having a backbone of like structure bearing two pyridinium groups attached through the nitrogen atoms, the composition having on the average less than one pyridinium group per molecule of resinous compound.

3. The composition of either of Claim 1 or 2 characterized in that the pyridinium group corresponds to the formula:

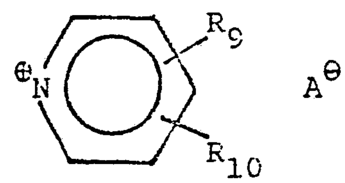

wherein $R_9$ and $R_{10}$ are each independently hydrogen, halo, hydrocarbyl or inertly-substituted hydrocarbyl; $A^{\ominus}$ is a compatible anion.

4. The composition of Claim 2 characterized in that the nonionic groups are alkylphenoxy groups.

5. The composition of Claim 4 characterized in that the alkylphenoxy group contains the alkyl substituent in the meta or para position and the alkyl substituent has from 4 to 18 carbon atoms.

6. A method of preparing a water-compatible composition comprising reacting a 1,2-epoxy containing resinous compound having a linear backbone consisting of at least one oxyaryleneoxyalkylene or oxyaryleneoxy-(1,3-(2-hydroxy)alkylene) unit with an amine in the presence of sufficient Brönsted acid and water to stabilize the quaternary ammonium group thus formed characterized in that the amine is a pyridine.

BAD ORIGINAL

7. The method of Claim 6 characterized in that the pyridine corresponds to the formula:

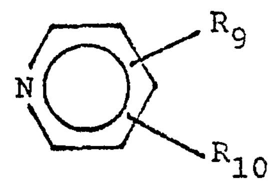

wherein $R_9$ and $R_{10}$ are each independently hydrogen, halo, hydrocarbyl or inertly-substituted hydrocarbyl.

8. A modified epoxy resin composition derived from an epoxy resin having, on the average, more than one epoxy group per molecule and a linear backbone consisting of repeating units corresponding to the formula:

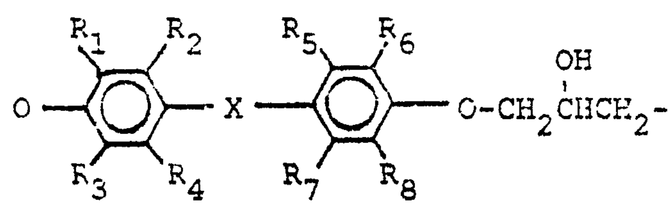

wherein X is a single covalent chemical bond or a divalent alkali-stable connecting group and $R_1$ through $R_8$ are each independently hydrogen, halo, hydrocarbyl, hydrocarbyloxy or inertly-substituted hydrocarbyl or hydrocarbyloxy groups characterized in that the epoxy resin is capped with an alkylphenol to a level such that the modified resin has an average of one or less epoxy group per molecule, the alkylphenol having from 4 to 18 carbons in the alkyl group.

0014851

European Patent Office

# EUROPEAN SEARCH REPORT

Application number
EP 80 10 0341

| DOCUMENTS CONSIDERED TO BE RELEVANT | | | CLASSIFICATION OF THE APPLICATION (Int. Cl.) |
|---|---|---|---|
| Category | Citation of document with indication, where appropriate, of relevant passages | Relevant to claim | |
| | US - A - 4 076 675 (E.G. SOMMERFELD)<br>* Claim 1, column 4, lines 32-42 *<br>--<br>US - A - 4 076 676 (E.G. SOMMERFELD)<br>* Claim 1, column 3, lines 37-51 *<br>---- | 1-6<br><br><br><br>1-6 | C 08 G 59/14<br>C 25 D 13/06 |
| | | | TECHNICAL FIELDS SEARCHED (Int.Cl.) |
| | | | C 08 G 59/14<br>C 25 D 13/06 |
| | | | CATEGORY OF CITED DOCUMENTS<br>X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| √ | The present search report has been drawn up for all claims | | &: member of the same patent family, corresponding document |

| Place of search | Date of completion of the search | Examiner |
|---|---|---|
| The Hague | 23-05-1980 | DE ROECK |

EPO Form 1503.1 06.78